# EUROPÄISCHE PATENTSCHRIFT

(11) **EP 0 677 141 B1**
(45) Veröffentlichungstag und Bekanntmachung des Hinweises auf die Patenterteilung: **22.01.1997**
(21) Anmeldenummer: 92907172.8
(22) Anmeldetag: 27.03.1992
(51) Int. Cl.: F01N 3/20, F01N 3/28

(54) **KATALYSATOR**
CATALYTIC CONVERTER
CATALYSEUR

(30) Priorität: 28.03.1991 DE 4110395
(43) Veröffentlichungstag der Anmeldung: 18.10.1995
(73) Patentinhaber: ROTH-Technik GmbH & Co. Forschung für Automobil- und Umwelttechnik, 76571 Gaggenau (DE)
(72) Erfinder: Häfele, Edelbert, Dr., D-7500 Karlsruhe 41 (DE)
(74) Vertreter: Säger, Manfred, Dipl.-Ing.
(86) Internationale Anmeldenummer: EP9200688
(87) Internationale Veröffentlichungsnummer: WO9217692

(56) Entgegenhaltungen:
- EP-A- 0 393 257
- WO-A-90/12951
- CH-A- 678 020
- DE-A- 4 017 360
- US-A- 4 535 589

## Beschreibung

Die Erfindung betrifft einen Katalysator gemäß dem Oberbegriff des Hauptanspruches.

Katalysatoren für das Abgas von Verbrennungsmotoren sind in einer Vielzahl von Ausführungsformen bekannt. Sie weisen ein Gehäuse mit einem darin angeordneten keramischen Monolithen auf, dessen Oberfläche mit einer für das Abgas wirksamen Schicht versehen ist, die nicht nur auf dem Mantel, sondern insbesondere in den parallel zueinander verlaufenden, wabenartigen Kanälen angebracht sind.

Diese Katalysatoren haben sich zwar bewährt. Sie haben jedoch den Nachteil, daß sie beim Kaltstart noch keinerlei Reduzierung der Startschadstoffe durch die katalytisch wirksame Schicht bewirken. Das Abgas hat nämlich beim Start eine Temperatur von ca. 100°C. Hiervon wird der Katalysator aufgeheizt und ist erst ab ca. 400°C funktionsbereit, was dazu führt, daß in der Startphase beim Kaltstart eines Kraftfahrzeugs noch schädliches Abgas entsteht.

Zur Behebung dieses Nachteils sind schon sogenannte Startkatalysatoren bekannt geworden (DE-GM 88 10 816), bei dem nicht ein keramischer Monolith, sondern ein metallischer Träger für die Katalysatorschicht (sogenannter Metallith) vervJendet vJird. Dieser Katalysator besteht aus strukturierten Blechen, welche einen Wabenkörper bilden, der eine Vielzahl von zueinander parallelen für das Abgas durchlässigen Strömungskanälen aufweist. Üblicherweise wird hier der metallische Katalysatorträger elektrisch beheizt und somit die darüberliegende keramische Wirkschicht des Katalysators über Wärmeleitung erhitzt.

Die direkte elektrische Beheizung von Katalysatorträgerkörpern stieß jedoch bisher auf große Schwierigkeiten, da die üblichen metallischen Strukturen einen zu geringen elektrischen Widerstand aufweisen, als daß sie mit den bei Kraftfahrzeugen üblichen und vorhandenen elektrischen Spannungen direkt als Heizkörper benutzt werden könnten (DE-PS 563 757). Zum Teil wird in der Technik auch versucht, Katalysatorkörper mittels elektrischer Heizelemente separat zu beheizen (DE-AS 22 30 663). Das gesonderte Heizele ent dient jedoch nicht gleichzeitig als Katalysatorträgerkörper. Es ist ferner bekannt (G 89 05 073.8), daß mit nur sehr aufwendig gestaltete Wabenkörper eine systemkonforme elektrische Versorgung mittels einer 12 V-Spannung realisiert werden können. Die aufwendige Bauform führt jedoch nicht zuletzt zu erhöhten Kosten bei der Fertigung.

Folglich ist nicht nur die eigentlich katalytisch wirksame Schicht, sondern auch der Metallith aufzuheizen. Hinzu kommt, daß das beheizte metallische Material eine hohe Wärmeleitfähigkeit aufweist und bedingt somit wiederum einen hohen Leistungsbedarf, da sich die auch segmenthaft aufgebrachte Energie sehr schnell per Wärmeleitung ausbreitet und dadurch ausgeprägte Temperaturmaxima verhindert werden. Grundsätzlich ist der weitere Nachteil gegeben, daß diese Art von Katalysatoren sehr gut Wärme, auch im üblichen Betrieb ableiten und dadurch sehr schnell auskühlen und die notwendige Betriebstemperatur bei Betriebsbedingungen mit relativ kaltem Abgas (z.B. Leerlauf) schnell unterschritten wird (DE-GM 89 05 073.8).

Ferner ist ein Dieselrußfilter bekannt (US-A-4 535 589), bei dem eigentlichen Filter in Strömungsrichtung ein Heizer vorgeschaltet ist. Dieser Filter besteht aus Keramik und weist einen elektrischen Heizer auf der Oberfläche dessen keramischen Träger auf. Dieser Filter dient zum Sammeln der im Abgas enthaltenen Rußpartikelchen. Diese werden von Zeit zu Zeit aufgrund der im vorgeschalteten Heizer erzeugten Wärme abgebrannt. Hierbei entstehen dann wieder schädliche Abgase, die aus dem Abgas wieder entfernt werden müssen.

Es ist auch bekannt (EP-A-0 393 257), bei einem Dieselrußfilter den Heizer durch einen katalytischen Starter zu ersetzen, der einen metallischen Träger, jedoch ohne Heizung aufweist.

Der Erfindung liegt das Problem zugrunde, unter Vermeidung der Nachteile von Metallith-Katalysatoren einen schnell wirksamen und wenig elektrische Heizenergie benötigenden Katalysator bereitzustellen.

Diese Aufgabe wird bei einem gattungsgemäßen Katalysator gemäß dem Oberbegriff des Hauptanspruchs erfindungsgemäß durch dessen kennzeichnende Merkmale gelöst.

Mit der Erfindung wird also ein Teilbereich der Oberfläche des Trägers aus einem metallischen werkstoff mit wenigstens einer elektrisch leitenden Widerstandsheizschicht versehen, die aus Platin oder Platinmetallen, wie Ruthenium, Rhodium, Palladium oder den Metallen Silber oder Gold bzw. Legierungen der obigen Metalle bzw. Platinmetallen, z.B. Ag - Pd und/oder aus leitfähigen Metalloxiden, wie beispielsweise Titanoxid, Nickeloxid, Kobaltoxid, Manganoxid, Zinkoxid, Kupferoxid, Niobpentoxid oder Zinndioxid bestehen kann. Die Widerstandsheizschicht kann, sofern sie beispielsweise aus den oben erwähnten Platinmetallen besteht, selbst die katalytisch wirksame Schicht sein oder ihrerseits zusätzlich mit der katalytisch wirksamen Schicht beschichtet bzw. imprägniert sein. Beim Start wird die Widerstandsheizschicht kurzzeitig durch Anlage einer elektrischen Spannung infolge des dadurch bewirkten elektrischen Stroms vorgeheizt, wodurch sehr schnell eine heiße Oberfläche erhalten wird, an der die katalytische Wirkung bereits auftritt. Durch Wärmeleitung wird anschließend dann auch der sich an die Widerstandsheizschicht anschließende Bereich des Trägers bzw. die katalytisch wirkende Schicht erwärmt, so daß auch dieser Restbereich wirksam wird. Dieser Vorgang wird durch das beim Starten vermehrt auftretende Kohlenmonoxid unterstützt, welches in diesem Zustand exotherm mit der katalytisch wirksamen Schicht reagieren kann, so daß hierdurch bedingt die Erwärmung dieses Teilbereichs noch unterstützt wird. Es wird also erfindungsgemäß nur die eigentlich katalytisch wirksame Schicht und nicht etwa der Träger mitaufgeheizt, wodurch ein schnelles Aufheizen moglich und relativ wenig Energie erforderlich ist. Die elektrisch wirksame Schicht Kann unter Zwischenschaltung einer elektrisch isolierenden, vorzugsweise schlecht wärmeleitenden keramischen Schicht auf dem metallischen Träger aufgebracht sein.

Der Träger kann vorzugsweise in Form wabenartiger Kanäle ausgebildet sein, wobei der Querschnitt der Kanäle eckig, beispielsweise vier-, sechsoder achteckig oder auch rund bzw. halbrund ausgebildet sein kann.

Wenn des weiteren in zweckmäßiger Ausgestaltung die Widerstandsheizschicht in Strömungsrichtung des Abgases am Träger vorne angebracht ist, so wird der Erwärmungsvorgang des Restbereiches der Oberfläche des Trägers mit der katalytisch wirksamen Schicht noch dadurch unterstützt, daß das Abgas einen Teil der Wärme auch konvektiv zu den restlichen Bereichen des Katalysators transportiert.

## Patentansprüche

1. Katalysator für das Abgas von Verbrennungsmotoren mit einem Gehäuse und einem darin angeordneten Träger mit einer Vielzahl von zueinander parallel verlaufenden, vorzugsweise wabenartig ausgebildeten Kanälen und mit einer katalytisch gegenüber dem Abgas wirksamen Schicht,
**dadurch gekennzeichnet,**
daß ein Teilbereich der Oberfläche des Trägers eine elektrisch-leitende Widerstandsheizschicht aufweist, daß entweder diese zugleich katalytisch wirksam ausgebildet oder die gegenüber dem Abgas katalytisch wirksame Schicht auf der Widerstandsheizschicht aufgebracht ist und daß die elektrisch leitende Widerstandsheizschicht unter Zwischenschaltung einer elektrisch isolierenden Schicht auf dem Träger aus metallischem Werkstoff aufgebracht ist.

2. Katalysator nach Anspruch 1, dadurch gekennzeichnet, daß die katalytisch wirksame Schicht mittels Siebdruck in Dickschichttechnik aufgebracht ist.

3. Katalysator nach einem der Ansprüche 1 oder 2, dadurch gekennzeichnet, daß der Teilbereich der Oberfläche des Trägers in Strömungsrichtung des Abgases an dem vorderen Teil des Trägers angeordnet ist.

## Claims

1. A catalytic converter for the exhaust gas of internal combustion engines comprising a housing and a carrier arranged therein with a plurality of passages which extend in mutually parallel relationship and which are preferably of a honeycomb configuration, and a layer which is catalytically active relative to the exhaust gas, characterised in that a portion of the surface of the carrier has an electrically conductive resistance heating layer, that either said resistance heating layer is at the same time of a catalytically active nature or the layer which is catalytically active relative to the exhaust gas is disposed on the resistance heating layer, and that the electrically conductive resistance heating layer is disposed with the interposition of an electrically insulating layer on the carrier of metallic material.

2. A catalytic converter according to claim 1 characterised in that the catalytically active layer is applied by means of screen printing using a thick-film procedure.

3. A catalytic converter according to one of claims 1 and 2 characterised in that the portion of the surface of the carrier is arranged at the front part of the carrier in the direction of flow of the exhaust gas.

## Revendications

1. Catalyseur pour les gaz d'échappement de moteurs à combustion interne, comportant un boîtier dans lequel est agencé un support comportant un grand nombre de canaux parallèles ayant, de préférence, une structure en nid d'abeilles, recouverts d'une couche ayant un effet catalytique vis-à-vis des gaz d'échappement, **CARACTERISE :**
- en ce qu'une zone partielle de la surface du support présente une couche électroconductrice de chauffage par résistance,
- en ce que, soit cette dernière est réalisée de façon à être simultanément catalytiquement efficace, soit la couche à effet catalytique vis-à-vis des gaz d'échappement est disposée sur la couche de chauffage par résistance, et
- en ce que la couche électroconductrice de chauffage par résistance est disposée sur le support en un matériau métallique, une couche électriquement isolante étant disposée entre eux.

2. Catalyseur selon la revendication 1, **caractérisé** en ce que la couche à effet catalytique est appliquée par sérigraphie par la technique des couches épaisses.

3. Catalyseur selon la revendication 1 ou 2, **caractérisé** en ce que la zone partielle de la surface du support est, par rapport à la direction d'écoulement des gaz d'échappement, disposée contre la partie avant du support.
